# EUROPÄISCHE PATENTSCHRIFT

(11) **EP 1 448 282 B1**
(45) Veröffentlichungstag und Bekanntmachung des Hinweises auf die Patenterteilung: **20.06.2007**
(21) Anmeldenummer: 02787603.6
(22) Anmeldetag: 08.11.2002
(51) Int. Cl.: B01D 9/00, C07C 51/47, C07C 51/43, C07C 57/04

(54) **VORRICHTUNG ZUM REININGENDEN ABTRENNEN VON KRISTALLEN AUS IHRER SUSPENSION IN VERUNREINIGTER KRISTALLSCHMELZE**
DEVICE FOR PERFORMING THE PURIFYING SEPARATION OF CRYSTALS OUT OF THEIR SUSPENSION IN A CONTAMINATED CRYSTAL MELT
DISPOSITIF DE SEPARATION EPURATRICE DE CRISTAUX DE LEUR SUSPENSION DANS DES CRISTAUX FONDUS CONTAMINES

(30) Priorität: 15.11.2001 DE 10156016
(43) Veröffentlichungstag der Anmeldung: 25.08.2004
(73) Patentinhaber: BASF Aktiengesellschaft, 67056 Ludwigshafen (DE)
(72) Erfinder: HEILEK, Jörg, 69245 Bammental (DE); BAUMANN, Dieter, 67227 Frankenthal (DE); ECK, Bernd, 68519 Viernheim (DE); HAMMON, Ulrich, 68163 Mannheim (DE); MÜLLER-ENGEL, Klaus, Joachim, 76297 Stutensee (DE)
(86) Internationale Anmeldenummer: PCT/EP2002/012499
(87) Internationale Veröffentlichungsnummer: WO 2003/041833

(56) Entgegenhaltungen:
- EP-A- 0 097 405
- EP-A- 0 175 401
- WO-A-01/77056
- US-A- 3 628 917

## Beschreibung

Vorliegende Erfindung betrifft eine Vorrichtung zum reinigenden Abtrennen von Kristallen aus ihrer Suspension in verunreinigter Kristallschmelze,
- die eine hohle zylindrische Kolonne (45) aufweist, die eine Konzentrierungs- und eine Waschzone begrenzt ;
- wobei sich vom ersten Ende der Kolonne (45) parallel zur Zylinderachse ein oder mehrere Filterrohre (7) durch die Kolonne erstrecken;
- wobei in der Wand eines Filterrohres (7) wenigstens ein Filter (6) angebracht ist, das die einzige direkte Verbindung zwischen dem Rohrinneren und dem Inneren der Kolonne (45) bildet;
- wobei die Konzentrationszone am den Filtern (6) gegenüberliegenden ersten Ende der Kolonne durch einen Öffnungen aufweisenden Boden (12) abgeschlossen ist;
- wobei ein erster Teil der Öffnungen des Bodens (12) einerseits in die Filterrohre (7) und andererseits gleichzeitig (auf der gegenüberliegenden Öffnungsseite) in eine Vorrichtung (5) zum Abführen von verunreinigter Kristallschmelze fortgeführt wird;
- wobei ein zweiter Teil der Öffnungen des Bodens (12) mit einem Verteilerraum (18) verbunden ist, in den die aufzutrennende Kristallsuspension zugeführt wird; und
- wobei die Kolonne (45) an ihrem dem ersten Ende gegenüberliegenden zweiten Ende in eine Zone (46) zum Aufschmelzen abgetrennter Kristalle mündet, die einen Auslaß (32) zur Entnahme einer Teilmenge der aufgeschmolzenen abgetrennten Kristalle aufweist.

Ferner betrifft vorliegende Erfindung die Verwendung einer solchen Vorrichtung zum reinigenden Abtrennen von Kristallen (insbesondere von Acrylsäurekristallen) aus ihrer Suspension in verunreinigter Kristallschmelze (insbesondere verunreinigter Acrylsäure).

Die nummerischen Adressen in dieser Schrift beziehen sich stets auf die dieser Schrift beiliegenden Figuren.

Die Begriffe zylindrisch und rohrförmig sollen in dieser Schrift so verstanden werden, dass sie alle geometrischen Formen (Körper) umfassen, deren Querschnitt kreisförmig oder kreisähnlich (z.B. eliptisch oder vieleckig (z.B. regelmäßiges Viereck, Sechseck oder Achteck)) ist.

Der Begriff verunreinigte Kristallschmelze soll in dieser Schrift so verstanden werden, dass er Schmelzen aus der zu kristallisierenden Komponente und Verunreinigungen und/oder Lösungen aus der zu kristallierenden Komponente und Lösungsmitteln beziehungsweise Lösungsmittelgemischen sowie Verunreinigungen umfaßt.

Vorrichtungen gemäß der Präambel dieser Schrift sind bekannt (vgl. z.B. EP-B 97405) und werden unter anderem als hydraulische Waschkolonnen zur reinigenden Abtrennung von Kristallen aus ihrer Suspension in verunreinigter Kristallschmelze empfohlen (vgl. z.B. DE-A 100 179 03 und WO-0177056). Diese Empfehlung gilt insbesondere für die reinigende Abtrennung von Acrylsäurekristallen aus deren Suspension in verunreinigter Acrylsäure.

Nachteilig an den im Stand der Technik empfohlenen Vorrichtungen ist jedoch, dass die mit ihnen erzielte Reinigungswirkung nicht in vollem Umfang zu befriedigen vermag.

Aufgabe der vorliegenden Erfindung war es daher, eine verbesserte Vorrichtung zum reinigenden Abtrennen von Kristallen aus ihrer Suspension in verunreinigter Kristallschmelze zur Verfügung zu stellen.

Demgemäß wurde eine Vorrichtung zum reinigenden Abtrennen von Kristallen aus ihrer Suspension in verunreinigter Kristallschmelze,
- die eine hohle zylindrische Kolonne aufweist, die eine Konzentrierungs- und eine Waschzone begrenzt ;
- wobei sich vom ersten Ende der Kolonne parallel zur Zylinderachse ein oder mehrere Filterrohre durch die Kolonne erstrecken;
- wobei in der Wand eines Filterrohres wenigstens ein Filter angebracht ist, das die einzige direkte Verbindung zwischen dem Rohrinneren und dem Inneren der Kolonne bildet;
- wobei die Konzentrationszone am den Filtern gegenüberliegenden ersten Ende der Kolonne durch einen Öffnungen aufweisenden Boden abgeschlossen ist;
- wobei ein erster Teil der Öffnungen des Bodens einerseits in die Filterrohre und andererseits gleichzeitig auf der gegenüberliegenden Öffnungsseite in eine Vorrichtung zum Abführen von verunreinigter Kristallschmelze fortgeführt wird;
- wobei ein zweiter Teil der Öffnungen des Bodens mit einem Verteilerraum verbunden ist, in den die aufzutrennende Kristallsuspension zugeführt wird; und
- wobei die Kolonne an ihrem dem ersten Ende gegenüberliegenden zweiten Ende in eine Zone zum Aufschmelzen abgetrennter Kristalle mündet, die einen Auslaß zur Entnahme einer Teilmenge der aufgeschmolzenen abgetrennten Kristalle aufweist,
gefunden, die dadurch gekennzeichnet ist, dass das Innere des Verteilerraums mit wenigstens einer Verteilerhilfe (1,44) ausgerüstet ist und die Kolonne einen zentralen Verdrängungskörper aufweist.

Unter Verteilerhilfe wird dabei in dieser Schrift jedwedes konstruktive Element im Verteilerraum verstanden, das einen Beitrag dazu zu leisten vermag, dass dem zweiten Teil der Öffnungen des Bodens eine über den gesamten Querschnitt der Kolonne möglichst einheitliche Kristallsuspension zugeführt wird.

Ein den Verteilerraum zur Konzentrationszone hin begrenzender, Öffnungen aufweisender, Boden soll in dieser Schrift nicht unter den Begriff Verteilerhilfe subsummieren.

Dagegen wären z.B. innerhalb des Verteilerraums angebrachte Lochböden oder Packungen dem Oberbegriff Verteilerhilfe zuzuordnen.

Waschkolonnen sind auch aus der EP-A 398437, der EP-A 98637, der EP-A 305316, der US-A 3872009 und der US-A 3777892 bekannt.

Vorstehende Erfindung fußt auf der in eingehenden Untersuchungen gewonnenen Erkenntnis, dass eine aufzutrennende Kristallsuspension auf ihrem Weg durch den Verteilerraum zum zweiten Teil der Öffnungen des Bodens in gewissem Umfang (z.B. durch eine unterschiedliche Sedimentationsneigung unterschiedlich großer Kristalle) auftrennt (klassiert). Entsprechende Auswirkungen kann z.B. auch ein über den Querschnitt des Verteilerraumes inhomogenes Strömungsprofil innerhalb der dem Verteilerraum zugeführten Kristallsuspension verursachen.

Im Ergebnis resultieren daraus in dem vor dem zweiten Ende der Kolonne sich ausbildenden Kristallbett Inhomogenitäten, die eine Minderung der Waschwirkung mit in der Kolonne aufsteigender Waschschmelze bedingen.

Durch die Anwendung der erfindungsgemäßen Verteilerhilfen kann dem abgeholfen werden.

Die in dieser Schrift beiliegende Figur 1 zeigt schematisch den prinzipiellen Aufbau einer hydraulischen Waschkolonne gemäß bekanntem Stand der Technik. Ihr Funktionsprinzip wird nachfolgend anhand einer reinigend aufzutrennenden Acrylsäuresuspension beispielhaft ausgeführt.

Die z.B. aus einem Suspensionskristallisator abgezogene Suspension (28) von Acrylsäurekristallen in unreiner Acrylsäureschmelze (Mutterlauge) wird mittels einer Pumpe (34) und/oder über hydrostatische Höhe unter überatmosphärischem Druck in den Suspensionsverteilungsraum (18) der Waschkolonne (45) eingespeist. Über Durchgänge (47) wird die Suspension über den Querschnitt der Waschkolonne verteilt. Als Vorrichtung (5) zum Sammeln und Abführen von unreiner Acrylsäureschmelze (Mutterlauge und Waschschmelze) (29 b) kann z.B. der zusammenhängende Innenraum eines Fluidregisters dienen. Unten am Fluidregister sind die Filterrohre (auch häufig Drainagerohre genannt) (7) angebracht (sie weisen bis zum ersten Filter (6) (einschließlich Konzentrierungszone) in der Regel einen konstanten Querschnitt auf), die mit dem Sammelraum (5) verbunden sind. Die Filterrohre (7) sind in einer definierten Höhe mit wenigstens je einem herkömmlichen Filter (6) versehen, durch das die Mutterlauge (29 a) aus der Waschkolonne abgeführt wird (dabei kann die Mutterlauge unter Normaldruck, Überdruck oder unter reduziertem Druck stehen; der hydrauliche Druck beträgt üblicherweise 0,1 bis 10 bar, häufig 1 bis 5 bar). Es bildet sich ein verdichtetes, unreines Kristallbett (30) aus. Das Kristallbett wird durch die aus dem hydraulischen Strömungsdruckverlust der Mutterlauge resultiernde Kraft an den Filtern vorbei in die Zone unterhalb der Filter transportiert. Die Rückführung eines Teils der abgeführten unreinen Acrylsäureschmelze (29 b) in den Suspensionsverteilungsraum (18) mittels der Steuerkreispumpe (25) ermöglicht die Regelung dieser Transportkraft.

Am unteren Ende der Waschkolonne werden die Acrylsäurekristalle z.B. mittels einer geschlitzten rotierenden Messerscheibe (8) vom Kristallbett abgetragen und in Reinproduktschmelze, die mit p-Methoxyphenol (MEHQ) überpolymerisationsinhibiert sein kann, im Resuspendierraum (20) resuspendiert (das MEHQ kann dem Schmelzkreis in Reinprodukt gelöst zugeführt werden). Diese Suspension wird in einem Schmelzkreis (46) mittels einer Schmelzkreispumpe (23) über einen Aufschmelzer (z.B. Wärmeübertrager) (24) geführt, über den auf indirektem Weg die zum Schmelzen der Kristalle erforderliche Wärme eingetragen wird. Bei Bedarf wird in den Schmelzkreis zusätzlich Luft zum Zweck der Zusatzpolymerisationsinhibierung eingedüst.

Ein Teil der geschmolzenen Kristalle wird als Reinproduktschmelze (32) aus dem Schmelzkreis (46) abgeführt. Die Einstellung der entnommenen Menge an Reinprodukt erfolgt über das Produktregelventil (36). Der verbleibende Teil der reinen Produktschmelze strömt druckbedingt als Waschmittel (35) entgegen der Transportrichtung des Kristallbettes zu den Filtern (6), wodurch eine Gegenstromwäsche der Kristalle erfolgt (Waschzone).

Detailliertere Angaben enthält die WO-0177056. Das Aufschmelzen eines Teils der Kristalle könnte aber auch unmittelbar in der Kolonne (45) vorgenommen werden (z.B. über entsprechende eingebaute Vorrichtungen zum Erwärmen). Es würde der Kolonne dann ebenfalls nur ein Teil der erzeugten Schmelze entnommen. Der andere Teil steigt als Waschschmelze auf. Vom Stand der Technik verschieden enthält eine erfindungsgemäße Waschkolonne im Suspensionsverteilungsraum (18) Verteilerhilfen. Dies kann in einfachster Ausgestaltung z.B. ein Rührer sein.

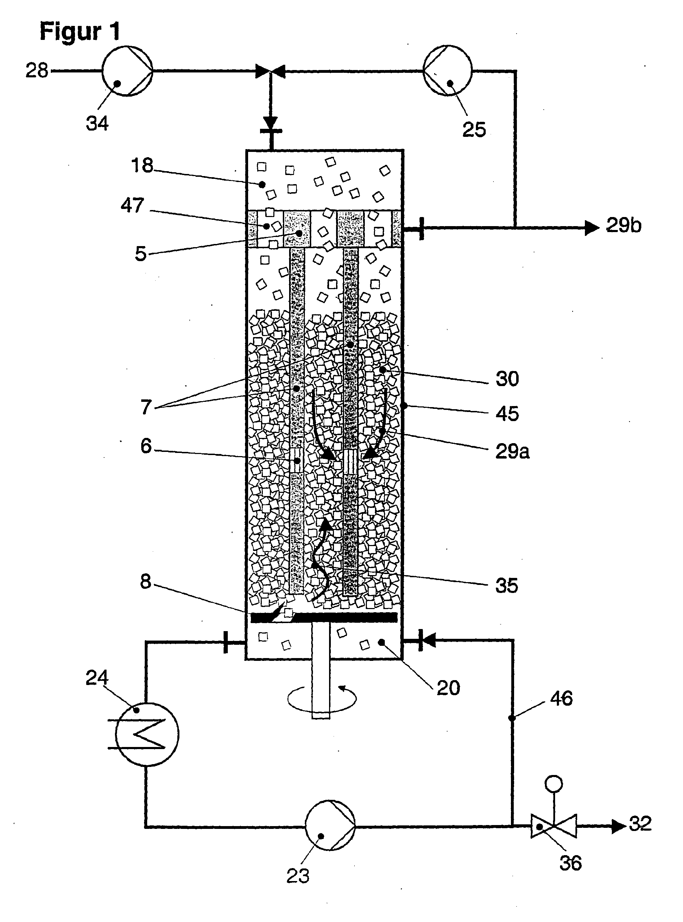

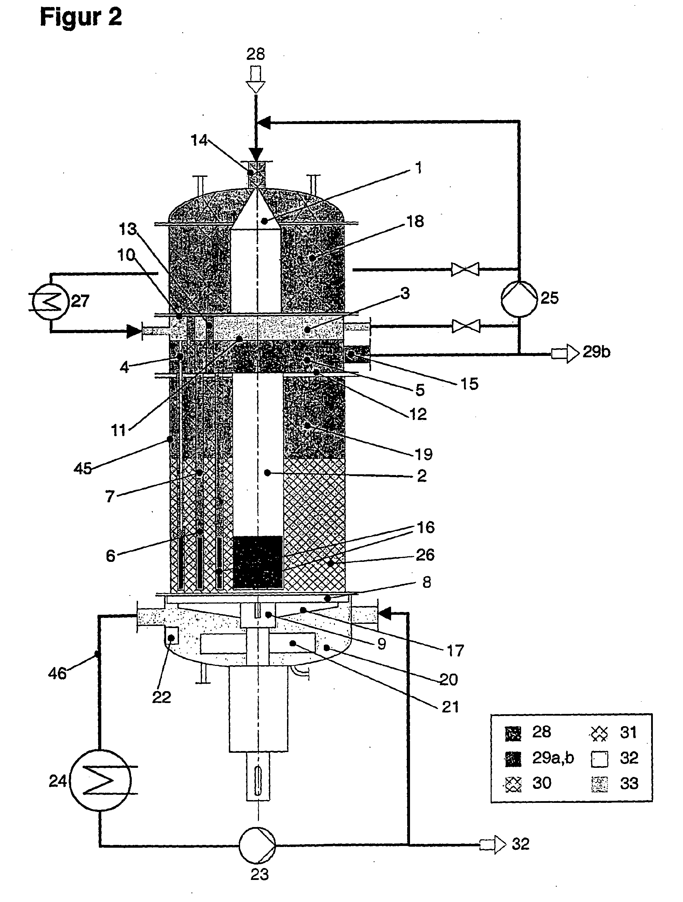

Erfindungsgemäß günstig erweist sich als Verteilerhilfe ein Verteilerkonus (1), wie ihn die erfindungsgemäße Vorrichtung in Figur 2 zeigt. Dabei bildet die Kegelspitze des Verteilerkonus, die zweckmäßig in den Suspensionszuführstutzen (14) hineinragt, erfindungsgemäß vorteilhaft einen Ringspalt, durch den die eingespeiste Suspension gleichmäßig über den Querschnitt verteilt wird. Das Abfließen durch den Boden (12) erfolgt dadurch mit, über den Querschnitt betrachtet, erhöhter Homogenität.

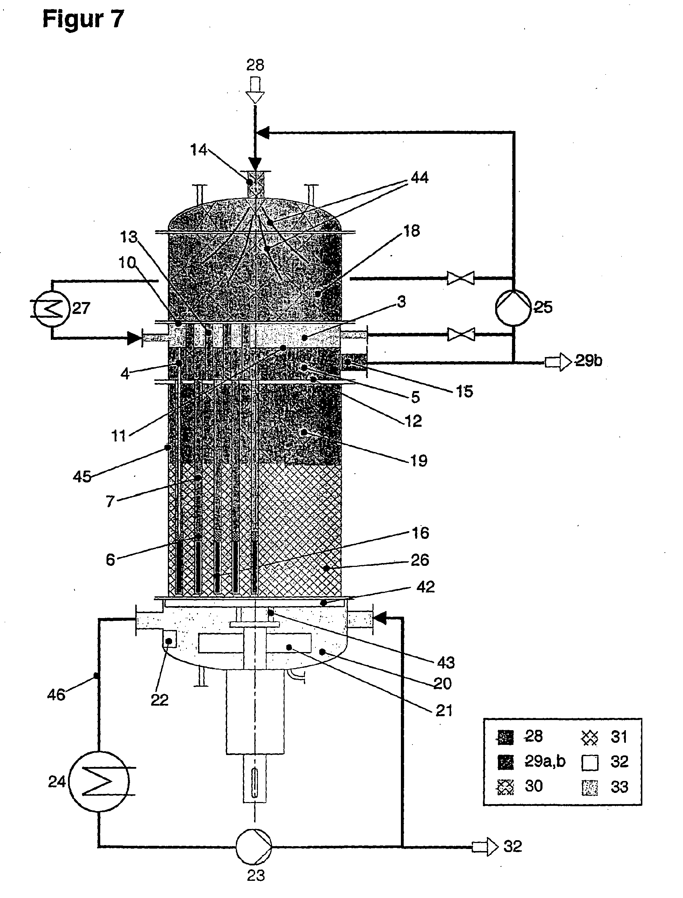

Anstelle eines Verteilerkonus kann auch eine Anordnung von Leitblechen im Suspensionsverteilungsraum angeordnet sein, wie sie Figur 7 zeigt, wobei Figur 7 keine erfindungsgemäße Ausführungsform zeigt. Als alternative Verteilerhilfe kommt auch eine über den Querschnitt gleichmäßige Verästelung von Suspensionszufuhrkanälen, die alle in den Suspensionszuführstutzen (14) münden, in Betracht.

Erfindungsgemäß vorteilhaft wird der Suspensionsverteilungsraum (18) gegenüber der Kolonne (45) durch einen Boden (12) und durch einen Boden (10) begrenzt, die ihrerseits einen zylindrischen Raum definieren. Beide Böden weisen Öffnungen auf (bevorzugt kreisrunde Bohrungen (Löcher)), von denen die Öffnungen des Bodens (10) mit einem Teil (dem zweiten Teil)der Öffnungen des Bodens (12) über durchgängige Verbindungsstücke (13) verbunden sind (z.B. münden beide Öffnungen in ein verbindendes Rohrstück). Über die Verbindungsstücke (13) gelangt die aufzutrennende Suspension in die Konzentrierungszone der Kolonne (45), d.h. in den Raum zwischen den Filterrohren (7).

Der Boden (12) weist zusätzlich einen ersten Teil an Öffnungen auf, die kein Gegenstück im Boden (10) aufweisen und in die Filterrohre (7) münden. Vorzugsweise handelt es sich auch bei diesem zweiten Teil von Öffnungen um kreisrunde Bohrungen (Löcher).

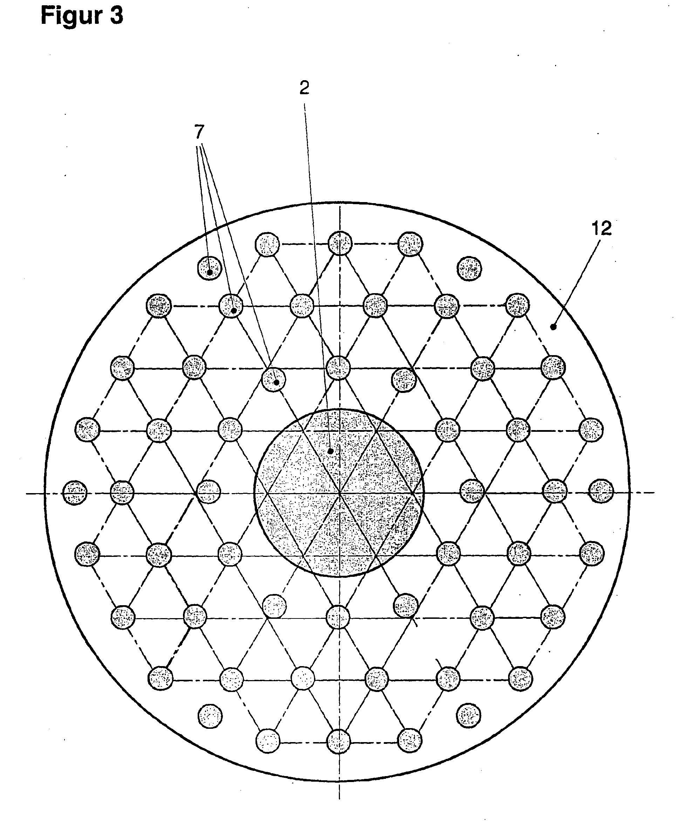

Dieser erste Teil von Öffnungen ist ebenso wie die Filterrohre (7), in die diese Öffnungen münden, bevorzugt gleichmäßig über den Querschnitt des Bodens (12) verteilt, wie es z.B. die Figur 3 zeigt.

Durch diese Gleichverteilung werden überwiegend gleichseitige Dreiecke definiert. Erfindungsgemäß vorteilhaft sitzt der zweite Teil der Öffnungen des Bodens (12) im Zentrum solcher Dreiecke. Vorzugsweise ist dieser zweite Teil der Öffnungen ebenfalls gleichmäßig über den Querschnitt des Bodens (12) verteilt.

Erfindungsgemäß von Vorteil ist es, wenn im wesentlichen alle Dreieckszentren durch zum zweiten Teil gehörige Öffnungen besetzt werden.

Der Raum um die Verbindungsstücke (13) bildet den Sammelraum (5) für Mutterlauge und Waschschmelze, aus dem über den Abzugsstutzen (15) unreine Schmelze weggeführt werden kann.

Von Vorzug ist es, wenn zwischen Sammelraum und Suspensionsverteilungsraum als ein weiterer Raum ein Spülflüssigkeitszuführraum (3) vorhanden ist, der durch Einziehen eines Zwischenbodens (11)geschaffen werden kann. Die Verbindungsstücke (13) werden im wesentlichen abdichtend durch den Zwischenboden (11) geführt. Zusätzlich weist der Zwischenboden (11) Öffnungen (bevorzugt kreisrunde Bohrungen (Löcher)) auf, die in Spülrohre (4) münden, die in gleicher Weise wie die Filterrohre (7) über den Querschnitt verteilt sind und bis in das untere Drittel des Filterelements (6) in die Filterrohre hineinragen. Der Aussendurchmesser der Spülrohre (4) wird zweckmäßig so gewählt, dass er dem 0,3- bis 0,5-fachen des Innendurchmessers der Filterrohre (7) entspricht. Im unteren Drittel sind an der Aussenwand jedes Spülrohres (4) mit Vorteil Zentriernocken angebracht, die eine zentrische Position des Spülrohres (4) im Filterrohr (7) sicherstellen.

Die Öffnungen im Boden (11) sind vorteilhaft so beschaffen, dass sie wahlweise geschlossen oder geöffnet werden können. Sind sie geschlossen, kann in den Raum (3) ein beliebiges Heizmedium eingespeist werden, um kristalline Ablagerungen und Inkrustationen auf dem Boden (10) und am Eintritt in die Verbindungsstücke (13) aufzuschmelzen.

Sind Öffnungen im Boden (11) geöffnet, können z.B. durch Verwendung von warmer Mutterlauge, warmer Reinschmelze oder warmen Lösungsmitteln als Spühlflüssigkeit kristalline Ablagerungen an den Filterelementen (6) aufgeschmolzen werden (im Fall von Acrylsäure wird dies stets polymerisationsinhibiert erfolgen).

Wie bereits erwähnt, sind die Filterrohre (7) auf einer definierten Höhe (vgl. WO-0177056) mit einem Filter (6) versehen. Die beim Aufkonzentrieren der Suspension anfallende Mutterlauge gelangt über die Filter (6) und das Innere der Filterrohre in den Sammelraum (3) und kann über einen Abzugsstutzen abgeführt werden.

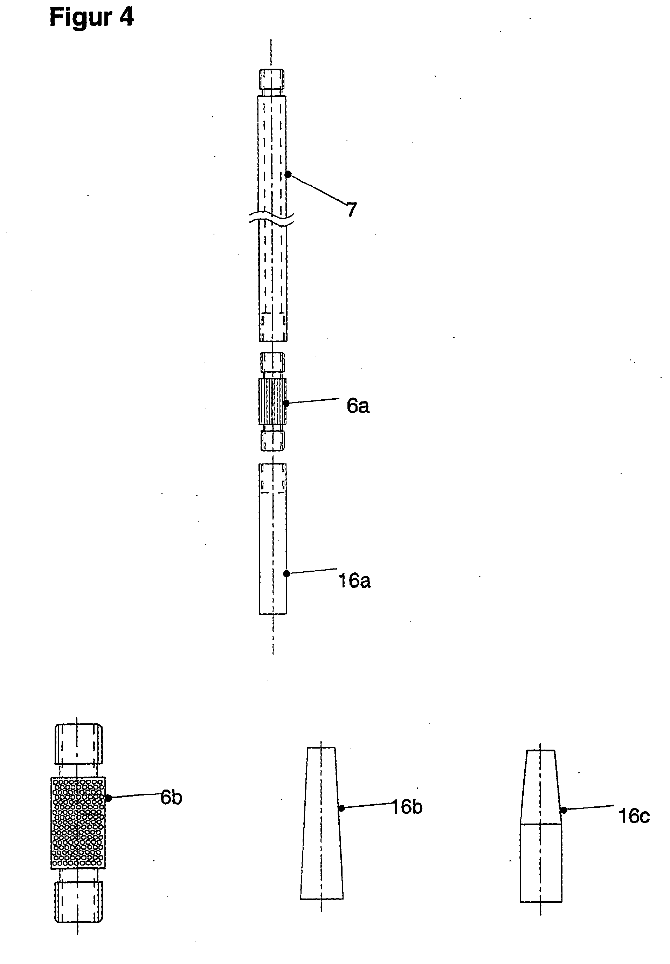

Figur 4 zeigt schematisch und beispielhaft den Aufbau eines Filterrohres (7). Der Außendurchmesser desselben ist erfindungsgemäß bevorzugt auf seiner Länge beginnend am Boden (12) und endend am zu diesem Boden entgegengesetzt liegenden Ende des Filters (6) konstant. In der Regel wird dieser Außendurchmesser 20 bis 100 mm betragen. Bevorzugte Außendurchmesswerte betragen 33,7 mm oder 48,3 mm. Die die filtrierende Wirkung des Filterelementes bedingende Perforation desselben kann sowohl längs geschlitzt (6a) als auch gelocht (6b) ausgeführt sein. Die Schlitzbreite bzw. der Lochungsdurchmesser betragen bevorzugt 100 bis 300 µm.

An das Filterelement (6) schließt sich normalerweise ein Filterrohrverdränger (16) an. In ihn vermag keine Flüssigkeit einzudringen. Dieser kann sowohl zylindrisch (16a), konisch (16b) oder als Kombination (16c) dieser Formen ausgeführt sein. Der Anschlußaußendurchmesser ist in der Regel identisch mit dem Außendurchmesser des Filterelementes.

Erfindungsgemäß bevorzugt besteht der Filterrohrverdränger aus einem Material mit einer geringen Wärmeleitfähigkeit (z.B. Teflon oder Polyethylen).

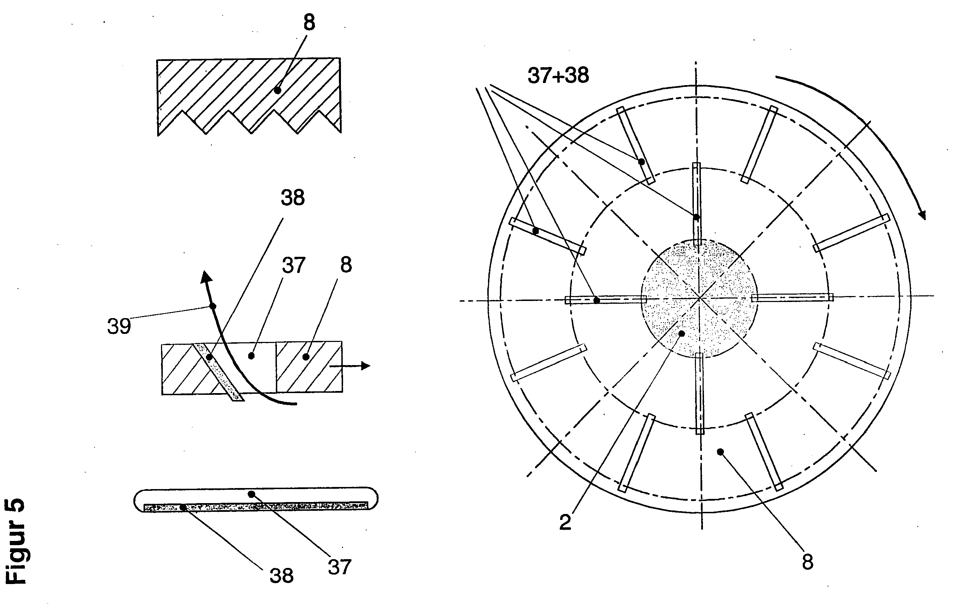

Wird als rotierende Messerscheibe eine solche gewählt, die keinen Feststoffabtrag im Zentrum bewirkt (Figur 5 und Figur 2), ist es erfindungsgemäß zweckmäßig, im Zentrum der Konzentrations- und Waschzone einen zentralen Verdrängerkörper (2) anzuordnen. Dessen Material sollte an dem der Schmelzzone zugewandten Ende (unterhalb der Ebene der Filterelemente (6)) gleichfalls aus einem Material mit geringer Wärmeleitfähigkeit bestehen (z.B. Teflon oder Polyethylen).

Beträgt die Längstausdehnung der feststoffabtragsfreien Zone im Zentrum = X, so kann die Querschnittslängstausdehnung des zentralen Verdrängerkörpers 0,5 X bis 2 X, häufig 0,5 X bis 1,5 X und bevorzugt 0,8 X bis 1,2 X betragen. Bevorzugt ist der zentrale Verdrängerkörper zylindrisch ausgeführt. In diesem Fall bildet er mit der Wand der zylindrischen Kolonne (45) einen kreisringförmigen Produktraum.

Ferner ist der zentrale Verdrängerkörper bevorzugt am Boden (12) statisch befestigt (der im Befestigungsflächenbereich in der Regel keinen Durchlaß, keine Öffnung aufweist) und reicht bis etwa 1 bis 20 mm über die Messerscheibe. Durch diese Anordnung ist eine einfache Ausführung der Messerscheibe und ein gleichmäßiges Abschaben der Kristalle in dem verbleibenden Ringraum um den Verdrängerkörper möglich.

Er kann jedoch auch fest mit der Messerscheibe verbunden und dadurch mit selbiger rotierend ausgeführt sein. Der Verdrängerkörper trägt zur Vermeidung einer inhomogenen Kristallbett-Dichte bei.

In besonderen Fällen kann der zentrale Verdrängerkörper auch als Filterrohr mit vergrößertem Querschnitt gestaltet sein und ein Filterelement (6) aufweisen.

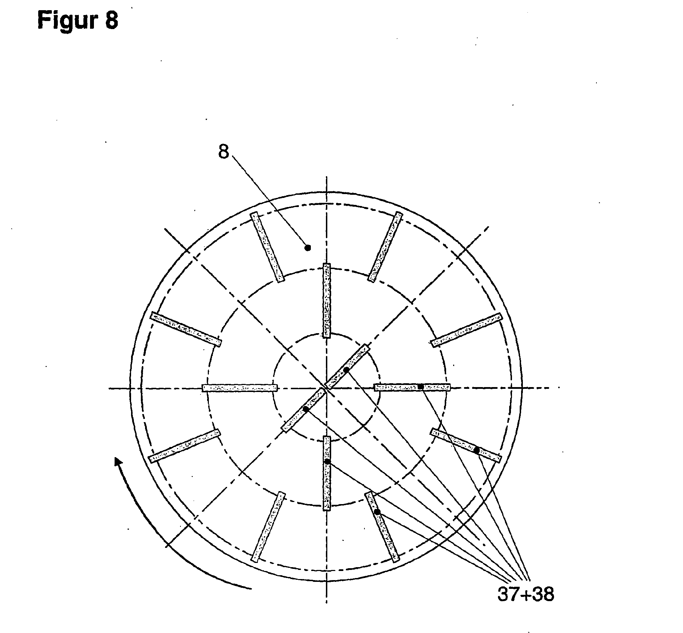

Wird eine rotierende Messerscheibe mit Feststoffabtrag im Zentrum verwendet (Figur 8 und (42) in Figur 7) wird die Verbindung von Antriebswelle und Messerscheibe als für abgetragene Kristalle durchlässig gewählt (43).

Der Bereich aus der Konzentrations- und aus der Waschzone wird erfindungsgemäß vorteilhaft durch eine rotierende Messerscheibe (8) abgeschlossen, mit der die Kristalle vom eingedickten Kristallkuchen abgetragen werden. Sie gelangen dann vorteilhaft über einen Resuspendierraum (20) in den Schmelzkreis (in die Schmelzzone) (46), aus dem sie in aufgeschmolzener Form teilweise ausgetragen werden.

Die Messerscheibe (Figur 5 und Figur 8) ist mit vorzugsweise radial ausgerichteten Schlitzen (37) versehen, die so über den Querschnitt verteilt sind, dass bei einer Umdrehung durch jeden Schlitz (37) etwa die gleiche Menge an Kristallen gelangt. Jeder Schlitz ist mit einer schräg sitzenden Klinge (Messer) (38) bestückt, mit der die Kristalle vom Kristallkuchen abgeschabt werden. Die Oberfläche der Messerscheibe wird bevorzugt profiliert (8) ausgeführt, um eine möglichst gleichmäßige Verteilung der Waschschmelze zu gewährleisten.

Weiterhin ist es erfindungsgemäß von Vorteil, den Durchmesser der Messerscheibe (8) um 5 bis 100 mm größer als den Innendurchmesser der zylindrischen Kolonne (45) zu wählen. Zur Verbesserung der Resuspendierung der abgeschabten Kristalle unterhalb der Messerscheibe ist es hilfreich, unterhalb der Messerscheibe Paddel (21) zu befestigen, die den Resuspendierungsraum durchmischen. Zu diesem Zweck können auch Verstärkungselemente (17) zwischen Wellennabe und Messerscheibe großflächig ausgeführt werden.

Als für die Resuspendierung vorteilhaft erweist sich auch die Anbringung von Stromstörern (22).

Die Antriebswelle (9) der Messerscheibe ist in vorteilhafter Weise mit einer doppelt wirkenden Gleitringdichtung (z.B. der Fa. Crane) abgedichtet. Zur Aufnahme der radialen und axialen Kräfte ist die Antriebswelle (9) zweckmäßig mit zwei radial und einem axial wirkenden Wälzlager geführt.

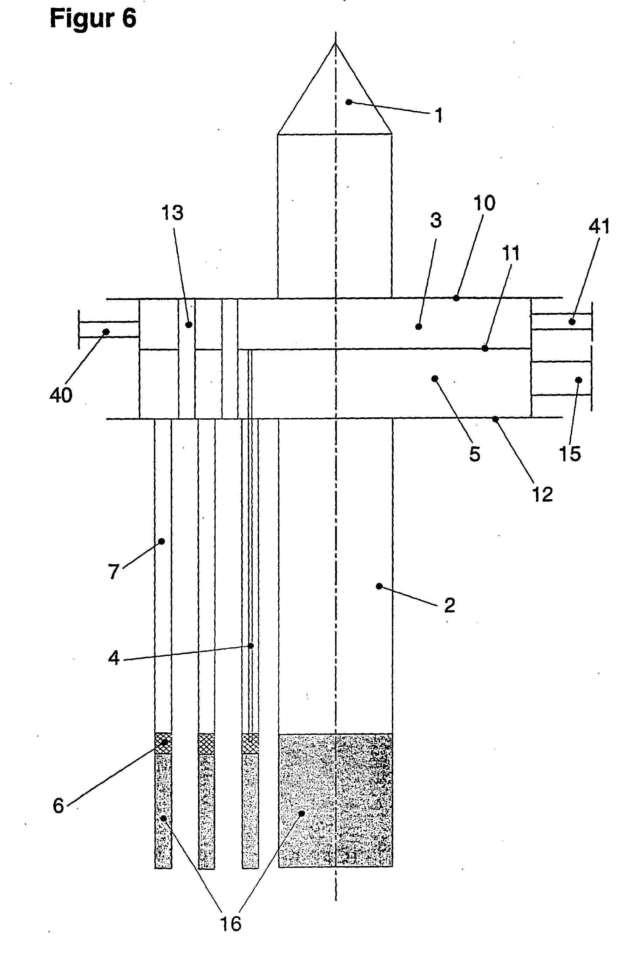

Figur 6 zeigt nochmals im Überblick die für die erfindungsgemäße Vorrichtung (Waschkolonne) als besonders zweckmäßig erachteten Einbauten.

Die erfindungsgemäße Vorrichtung eignet sich insbesondere zum reinigenden Abtrennen von Acrylsäurekristallen aus ihrer Suspension in verunreinigter Acrylsäureschmelze, wie sie in der WO-0177056 beschrieben ist. Sie eignet sich aber auch im Fall anderer Kristallsuspensionen, wie sie z.B. in der EP-A 97405 mit Xylolsuspensionen beschrieben sind. In diesem Zusammenhang sind auch N-Vinylpyrrolidon- und Methacrylsäuresuspensionen zu nennen.

Im Fall der Acrylsäure werden als Pumpen (34), (25) und (23) bevorzugt Pumpen vom Typ Kreiskolbenpumpen und/oder Kreiselpumpen eingesetzt. Sieht man von den Verdrängern ab, empfiehlt sich als Material für die erfindungsgemäßen Waschkolonnen Edelstahl, insbesondere Edelstahl der Sorte 1.4571 oder eine Nickelbasislegierung. Dies gilt auch für die Filterelemente (insbesondere im Fall einer Acrylsäureanwendung).

Die Anzahl der Filterrohre kann im Fall einer großtechnischen Anwendung erfindungsgemäß 3 bis 200 betragen. Die Länge der Filterrohre liegt dabei typisch im Bereich 500 bis 2000 mm und die Länge der Filterelemente beträgt häufig 20 bis 200 mm, während die Länge der Filterrohrverdränger regelmäßig 100 bis 500 mm beträgt. Der Innendurchmesser der Kolonne (45) kann 300 bis 3000 mm betragen.

Erfindungsgemäß vorteilhaft ist auch, wenn die zu behandelnde Kristallsuspension über mehrere verteilte Einspeisestellen dem Suspensionsverteilungsraum zugeführt wird. Generell eignen sich als erfindungsgemäße Verteilerhilfen konstruktive Elemente, die vorhandene Strömungsfelder der zugeführten Kristallsuspension umzulenken und/oder der Kristallsuspension ein neues Strömungsfeld aufzuprägen vermögen. Im Idealfall läuft durch jedes der Verbindungsstücke (13) eine identische Kristallsuspension. Die Filterrohre (7) können in den Boden (12) eingeschraubt oder eingeschweißt sein. Das gleiche gilt für die Spühlrohre (4). Die Verbindungsrohre (13) sind in die Böden (10), (12) eingeschweißt.

Die Räume (5) und (3) weisen im übrigen auf beiden Seiten vorzugsweise angebrachte Gehäusestutzen mit Deckel auf. Durch die damit gewährleistete Abnehmbarkeit werden die Räume (5) und (3) zugänglich, was z.B. zur Entfernung von unerwünschter Polymerbildung (z.B. im Fall von Acrylsäure) von Vorteil sein kann.

Auch ist es erfindungsgemäß vorteilhaft, wenn das Gehäuse der Waschkolonne im Bereich des Kristallbetts wenigstens gegen die Umgebung isoliert ist. Bevorzugt wird in diesem Bereich jedoch mittels einer Begleitheizung (0°C bis 20°C im Fall von Acrylsäure) temperiert. Diese Temperierung wird mit Vorteil zonenweise verwirklicht (z.B. eine erste Temperierzone (12°C bis 17°C im Fall von Acrylsäure) für den Bereich des gereinigten Kristallbetts unterhalb der Waschfront und eine zweite Temperierzone (0°C bis 15°C im Fall von Acrylsäure) für den Bereich oberhalb der Waschfront).

Im übrigen haben die nummerischen Adressen in dieser Schrift die nachfolgende Bedeutung:
- 1 =: Verteilerkonus
- 2 =: zentraler Verdränger(-körper)
- 3 =: Spülflüssigkeits(zuführ)raum
- 4 =: Spülrohr
- 5 =: Flüssigkeits(Mutterlauge-)sammelraum
- 6 =: Filterelement
- 6a=: Filterelement mit Längsschlitzen
- 6b=: Filterelement mit Löchern
- 7 =: Filterrohr
- 8 =: Rotierende Messerscheibe
- 9 =: Verbindung Messerscheibe/Antriebswelle (=Nabe)
- 10 =: oberer Lochboden
- 11 =: Zwischenboden
- 12 =: unterer Lochboden
- 13 =: (Suspensionsdurchführ-)Rohr
- 14 =: Suspensionszuführstutzen
- 15 =: Flüssigkeits(Muttelauge-)abzugstutzen
- 16 =: Verdränger(-körper) aus schlecht wärmeleitfähigem Material
- 16a=: Verdränger zylindrisch
- 16b=: Verdränger konisch
- 16c=: Verdränger konisch/zylindrisch
- 17 =: Verstärkung(srippe)
- 18 =: Suspensionsverteilungsraum
- 19 =: Aufkonzentrierungs- und Waschungsraum
- 20 =: Resuspendierraum
- 21 =: Paddel oder Rührerblatt
- 22 =: Stromstörer
- 23 =: Schmelzkreispumpe
- 24 =: Heizer im Schmelzkreis (Aufschmelzer)
- 25 =: Steuerkreispumpe
- 26 =: Waschfront
- 27 =: Heizer für Spülflüssigkeit
- 28 =: Suspension
- 29a=: Mutterlauge
- 29b=: Mutterlauge + Waschflüssigkeit
- 30 =: Verdichtetes Kristallbett (unrein)
- 31 =: Verdichtetes Kristallbett (rein)
- 32 =: Produktschmelze rein
- 33 =: Spülflüssigkeit warm
- 34 =: Suspensionszuführpumpe
- 35 =: Waschflüssigkeit
- 36 =: Produktschmelze-Abzugsventil
- 37 =: Schlitz in rotierender Messerscheibe
- 38 =: Messer
- 39 =: Vom Messer bei Rotaion der Scheibe abgeschabte Kristalle
- 40 =: Spülflüssigkeitszuführstutzen
- 41 =: Spülflüssigkeitsabführstutzen
- 42 =: Rotierende Messerscheibe mit Feststoffabtrag im Zentrum
- 43 =: Für Feststoffabfuhr offene Verbindung Antriebswelle/Messerscheibe
- 44 =: (Suspensions-)Verteilungsbleche
- 45 =: zylindrische Kolonne umfassend Konzentrierungszone + Waschzone
- 46 =: Schmelzzone
- 47 =: Durchgänge

## Patentansprüche

1. Vorrichtung zum reinigenden Abtrennen von Kristallen aus ihrer Suspension in verunreinigter Kristallschmelze,
- die eine hohle zylindrische Kolonne (45) aufweist, die eine Konzentrierungs- und eine Waschzone begrenzt;
- wobei sich vom ersten Ende der Kolonne (45) parallel zur Zylinderachse ein oder mehrere Filterrohre (7) durch die Kolonne erstrecken;
- wobei in der Wand eines Filterrohres (7) wenigstens ein Filter (6) angebracht ist, das die einzige direkte Verbindung zwischen dem Rohrinneren und dem Inneren der Kolonne (45) bildet;
- wobei die Konzentrationszone am den Filtern (6) gegenüberliegenden ersten Ende der Kolonne durch einen Öffnungen aufweisenden Boden (12) abgeschlossen ist;
- wobei ein erster Teil der Öffnungen des Bodens (12) einerseits in die Filterrohre (7) und andererseits gleichzeitig auf der gegenüberliegenden Öffnungsseite in eine Vorrichtung (5) zum Abführen von verunreinigter Kristallschmelze fortgeführt wird;
- wobei ein zweiter Teil der Öffnungen des Bodens (12) mit einem Verteilerraum (18) verbunden ist, in den die aufzutrennende Kristallsuspension zugeführt wird; und
- wobei die Kolonne (45) an ihrem dem ersten Ende gegenüberliegenden zweiten Ende in eine Zone (46) zum Aufschmelzen abgetrennter Kristalle mündet, die einen Auslaß (32) zur Entnahme einer Teilmenge der aufgeschmolzenen abgetrennten Kristalle aufweist,
**dadurch gekennzeichnet, dass** das Innere des Verteilerraums mit wenigstens einer Verteilerhilfe (1,44) ausgerüstet ist und die Kolonne einen zentralen Verdrängerkörper (2) aufweist.

2. Vorrichtung nach Anspruch 1, **dadurch gekennzeichnet, daß** das Material des zentralen Verdrängerkörpers (2) unterhalb der Ebene der Filterlemente (6) aus Teflon oder Polyethylen besteht.

3. Vorrichtung nach Anspruch 1 oder 2, **dadurch gekennzeichnet, daß** der zentrale Verdrängerkörper zylindrisch ausgeführt ist.

4. Vorrichtung nach einem der Ansprüche 1 bis 3, **dadurch gekennzeichnet, dass** der zentrale Verdrängerkörper als Filterrohr mit vergrößertem Querschnitt gestaltet ist und ein Filterelement (6) aufweist.

5. Vorrichtung nach einem der Ansprüche 1 bis 4, **dadurch gekennzeichnet, dass** die Verteilerhilfe ein Verteilerkonus (1) ist.

6. Verwendung einer Vorrichtung gemäß einem der Ansprüche 1 bis 5 zum reinigenden Abtrennen von Kristallen aus ihrer Suspension in verunreinigter Kristallschmelze.

7. Verwendung nach Anspruch 6, **dadurch gekennzeichnet, dass** es sich bei den Kristallen um Kristalle der Acrylsäure handelt.

8. Verfahren zur reinigenden Abtrennung von Kristallen aus ihrer Suspension in verunreinigter Kristallschmelze, **dadurch gekennzeichnet, dass** das Verfahren in einer Vorrichtung gemäß einem der Ansprüche 1 bis 5 durchgeführt wird.

9. Verfahren nach Anspruch 8, **dadurch gekennzeichnet, dass** es sich bei den Kristallen um Kristalle der Acrylsäure handelt.

## Claims

1. An apparatus for separating crystals from their suspension in contaminated crystal melt with purification,
- which has a hollow cylindrical column (45) which bounds a concentration zone and a wash zone;
- one or more filter tubes (7) extending through the column from the first end of the column (45) parallel to the cylinder axis;
- at least one filter (6) which forms the only direct connection between the interior of the tube and the interior of the column (45) being mounted in the wall of a filter tube (7);
- the concentration zone being terminated at that first end of the column which is opposite the filters (6) by a tray (12) having orifices;
- a first part of the orifices of the tray (12) being continued, on the one hand, into the filter tube (7) and, on the other hand, simultaneously on the opposite side of the orifice into an apparatus (5) for removing contaminated crystal melt;
- a second part of the orifices of the tray (12) being connected to a distributor space (18) into which the crystal suspension to be separated is fed; and
- the column (45) opening, at its second end opposite the first end, into a zone (46) for melting crystals which have been separated off, which zone has an outlet (32) for removing a portion of the molten crystals separated off,
wherein the interior of the distributor space is equipped with at least one distributor aid (1, 44) and the column comprises a central displacer body (2).

2. The apparatus according to claim 1, wherein the material of the central displacer body (2) below the level of the filter elements (6) consists of Teflon or polyethylene.

3. The apparatus according to claim 1 or 2, wherein the central displacer body is cylindrical.

4. The apparatus according to any of claims 1 to 3, wherein the central displacer body is designed as a filter tube having a larger cross section and possesses a filter element (6).

5. The apparatus according to any of claims 1 to 4, wherein the distributor aid is a distributor cone (1).

6. The use of an apparatus according to any of claims 1 to 5, for separating crystals from their suspension in contaminated crystal melt with purification.

7. The use according to claim 6, wherein the crystals are crystals of acrylic acid.

8. A process for separating crystals from their suspension in contaminated crystal melt with purification, which is carried out in an apparatus according to any of claims 1 to 5.

9. The process according to claim 8, wherein the crystals are crystals of acrylic acid.

## Revendications

1. Procédé pour séparer et purifier des cristaux à partir de leur suspension dans une masse cristalline contaminée,
- qui présente une colonne cylindrique creuse (45) qui délimite une zone de concentration et une zone de lavage ;
- dans lequel un ou plusieurs tubes filtrants (7) s'étendent à travers la colonne depuis la première extrémité de la colonne (45) parallèlement à l'axe du cylindre ;
- dans lequel on a appliqué dans la paroi d'un tube filtrant (7) au moins un filtre (6) qui constitue le seul raccordement direct entre l'intérieur du tube et l'intérieur de la colonne (45) ;
- dans lequel la zone de concentration est isolée au niveau de la première extrémité de la colonne opposée aux filtres (6) par un plateau (12) présentant des ouvertures ;
- dans lequel une première partie des ouvertures du plateau (12) se prolonge d'une part dans les tubes filtrants (7) et, d'autre part simultanément, du côté opposé des ouvertures, dans un dispositif (5) destiné à évacuer la masse cristalline contaminée ;
- dans lequel une seconde partie des ouvertures du plateau (12) est raccordée à un espace de distribution (18) dans lequel on achemine la suspension cristalline que l'on souhaite séparer ; et
- dans lequel la colonne (45) aboutit au niveau de sa seconde extrémité opposée à la première extrémité dans une zone (46) destinée à la fusion des cristaux séparés, qui présente une sortie (32) pour prélever une quantité partielle des cristaux fondus séparés,
**caractérisé en ce que** l'intérieur de l'espace de distribution est équipé d'au moins un moyen de distribution auxiliaire (1, 44) et **en ce que** la colonne présente un corps déplaceur central (2).

2. Dispositif selon la revendication 1, **caractérisé en ce que** le matériau du corps déplaceur central (2) en dessous du niveau des éléments filtrants (6) est constitué de téflon ou de polyéthylène.

3. Dispositif selon la revendication 1 ou 2, **caractérisé en ce que** le corps déplaceur central se présente sous une forme cylindrique.

4. Dispositif selon l'une quelconque des revendications 1 à 3, **caractérisé en ce que** le corps déplaceur central est élaboré sous la forme d'un tube filtrant ayant une section agrandie et présente un élément filtrant (6).

5. Dispositif selon l'une quelconque des revendications 1 à 4, **caractérisé en ce que** le moyen de distribution auxiliaire est un cône de distribution (1).

6. Utilisation d'un dispositif selon l'une quelconque des revendications 1 à 5, pour séparer et purifier des cristaux à partir de leur suspension dans une masse cristalline contaminée.

7. Utilisation selon la revendication 6, **caractérisée en ce que** les cristaux sont des cristaux d'acide acrylique.

8. Procédé pour séparer et purifier des cristaux à partir de leur suspension dans une masse cristalline contaminée, **caractérisé en ce que** le procédé est réalisé sous la forme d'un dispositif selon l'une quelconque des revendications 1 à 5.

9. Procédé selon la revendication 8, **caractérisé en ce que** les cristaux sont des cristaux d'acide acrylique.
